# EUROPEAN PATENT SPECIFICATION

(11) **EP 2 207 916 B1**
(45) Date of publication and mention of the grant of the patent: **01.03.2017**
(21) Application number: 08846556.2
(22) Date of filing: 07.11.2008
(51) Int. Cl.: D01F 13/04, D01F 1/10, D01D 5/00, D01F 6/60

(54) **SOLVENT STRIPPING PROCESS ULTILIZING AN ANTIOXIDANT**
LÖSUNGSMITTELABSTREIFVERFAHREN UNTER VERWENDUNG EINES ANTIOXIDATIONSMITTELS
PROCÉDÉ D'ÉLIMINATION DU SOLVANT UTILISANT UN ANTIOXYDANT

(30) Priority: 09.11.2007 US 2643 P
(43) Date of publication of application: 21.07.2010
(73) Proprietor: E. I. du Pont de Nemours and Company, Wilmington, DE 19898 (US)
(72) Inventor: ARORA, Pankaj, Chesterfield Virginia 23832 (US); SIDDIQUI, Junaid, Ahmed, Richmond Virginia 23237 (US); FRISK, Simon, Newark Delaware 19711 (US); KIM, Young, H., Hockessin Delaware 19707 (US)
(74) Representative: Heinemann, Monica
(86) International application number: PCT/US2008/082764
(87) International publication number: WO 2009/062013

(56) References cited:
- EP-A- 1 746 187
- WO-A-02/49536
- J. NAM, Y. HUANG, S. AGARWAL AND J. NANNUTTI: "Materials Selection and Residual Solvent Retention in Biodegradable Electrospun Fibers" JOURNAL OF APPLIED POLYMER SCIENCE, vol. 107, 15 October 2007 (2007-10-15), pages 1547-1554, XP002528895
- KIM C W ET AL: "Structural studies of electrospun cellulose nanofibers" POLYMER, ELSEVIER SCIENCE PUBLISHERS B.V, GB, vol. 47, no. 14, 28 June 2006 (2006-06-28), pages 5097-5107, XP025231995 ISSN: 0032-3861 [retrieved on 2006-06-28]
- TORRES-GINER ET AL: "Characterization of the morphology and thermal properties of Zein Prolamine nanostructures obtained by electrospinning" FOOD HYDROCOLLOIDS, ELSEVIER, vol. 22, no. 4, 1 March 2007 (2007-03-01), pages 601-614, XP022458932 ISSN: 0268-005X

## Description

A process for stripping solvent from solvent-laden fibers in a solution-spun fiber web containing an antioxidant is disclosed.

### Background

The process of solution spinning involves dissolving a desired polymer into a suitable solvent, and spinning fibers from the polymer/solvent solution. Often, the solvent is an organic solvent which has undesirable properties in use of the so-formed fabric, such as adverse health effects, undesired odor and the like. It would be desirable to strip the unwanted solvent from the fibers or fabric during the production process, prior to use..

Solution spinning processes are frequently used to manufacture fibers and nonwoven fabrics, and in some cases have the advantage of high throughputs, such that the fibers or fabrics can be made in large, commercially viable quantities. Unfortunately, when solution spinning large quantities of fabric at high throughput through the spinning dies, significant quantities of residual solvent can be entrained in the collected fabrics or fibers. Ideally, the residual solvent would merely evaporate upon sitting, leaving the fabric solvent-free, but in many cases the ideal solvent used for the solution spinning process has a high chemical or physical affinity for the fiber polymer. In some cases, the fiber polymer is swollen by the solvent; i.e. the solvent molecules are absorbed and dispersed within the polymeric fibers. In other cases the solvent chemically bonds to the polymer molecules making up the fiber, such as by hydrogen bonding, Van der Waals forces, or even ionically via salt formation.

What is needed is a process for removing as much residual spinning solvent as possible without affecting the chemical and/or mechanical properties of the fibers or nonwoven webs.

### SUMMARY OF THE INVENTION

In a first embodiment, the invention is directed to a process for stripping chemically bonded spinning solvent from a solution-spun nonwoven web comprising the steps of providing a nonwoven web of solvent-laden polymeric nanofibers comprising a thermal-stabilizing effective amount of antioxidant, and heating and transporting the nonwoven web through a solvent stripping zone at a temperature and residence time sufficient to reduce the solvent concentration of the nonwoven web to less than about 1,000 ppmw.

### DETAILED DESCRIPTION OF THE INVENTION

The present invention relates to solvent-spun webs and fabrics for a variety of customer end-use applications, such as filtration media, battery and capacitor separators, protective apparel and the like, including at least one nanofiber layer, and a process for removing excess spinning solvent from the solution-spun nanofiber webs or fabrics.

There is a need for fibrous products made from a wide variety of polymers to suit various end use needs. Many polymeric fibers and webs can be formed from melt spinning processes, such as spun bonding and melt blowing. However, the ability to use melt spinning is limited to spinning fibers from polymers which are melt processable, i.e. those which can be softened or melted and flow at elevated temperatures. Still, in many end-uses, it is desirable to utilize polymers which are not melt processable to form fibrous materials, fabrics and webs. In order to form these non-melt-processable polymers into fibrous materials, the technique of solution spinning is used.

As discussed above, solution spinning processes, such as wet spinning, dry spinning, flash spinning, electrospinning and electroblowing, involve dissolving a desired polymer into a suitable solvent, and spinning fibers from the polymer/solvent solution. When spinning large quantities of polymer solution at high throughput through the spinning dies, so as to form nonwoven webs having basis weights of greater than about 1 gram/square meter (gsm), significant quantities of residual solvent can be entrained in the collected fabrics or fibers, due to either or both of high physical or chemical affinities of the solvent for the polymer so spun, and the lack of sufficient time or space between fiber formation and fiber collection for complete evaporation of the spinning solvent. In many cases, the solvents used in the solution spinning processes demonstrate various levels of toxicity, or present negative environmental effects or cause adverse chemical reactions in particular end-uses. As such, it is preferred to remove as much residual solvent from the solution spun fibrous materials as possible.

Solvent removal is often complicated by the fact that any particular polymer/solvent spinning system is chosen based upon a strong affinity of the solvent for the polymer, in order to effect complete dissolution of the polymer in the solvent during the spinning operation. In some cases, the fiber polymer is swollen by the solvent; i.e. the solvent molecules are absorbed and dispersed within the polymeric fibers. In other cases the solvent chemically bonds to the polymer molecules making up the fiber, such as by hydrogen bonding, Van der Waals forces, or even ionically via salt formation.

In some prior art solvent spinning processes, such as dry spinning, removal of high affinity solvents is accomplished by spinning the fibers into a hot gas "chimney" of as much as 30 feet in length, and passing high temperature gas (as high as 500°C) through the chimney to drive off the unwanted solvent. As can be imagined, this process involves an expensive apparatus and is an energy-intensive process.

It has been discovered that one manner of enhancing unwanted solvent removal from solution spun fibers is to reduce the diameter of the fibers themselves, since the diffusion de-volatilization mechanisms follow a 1/diameter² relationship. That is, entrained solvent will diffuse more readily out of fibers haying smaller diameters than out of fibers having larger diameters. According to the present invention, solution spun fibers have diameters less than about 1 micrometer (nanofibers) to optimize the diffusion de-volatilization mechanism of solvent removal.

The term "nanofibers" refers to fibers having diameters varying from a few tens of nanometers up to several hundred nanometers, but generally less than about one micrometer, even less than about 0.8 micrometer, and even less than about 0.5 micrometer.

The solution spun fabrics and webs of the present invention include at least one layer of polymeric nanofibers. The nanofibers have average fiber diameters of less than about 1 µm, preferably between about 0.1 µm and about 1 µm, and high enough basis weights to satisfy a variety of commercial end-uses, such as for air/liquid filtration media, battery and capacitor separators, protective apparel and the like.

A process for making commercial quantities and basis weights of nanofiber layer(s) is disclosed in International Publication Number WO2003/080905 (U.S. Serial No. 10/822,325), which is hereby incorporated by reference. This prior art electroblowing method comprises feeding a solution of a polymer in a solvent from a mixing chamber through a spinning beam into a spinning nozzle to which a high voltage is applied, while compressed gas is directed toward the polymer solution in a blowing gas stream as it exits the nozzle to form nanofibers, and collecting the nanofibers into a web on a grounded collector under vacuum.

The relatively high temperatures necessary to de-couple the spinning solvents from the fiber polymers are unexpected, as the skilled artisan would expect that the solvent would evaporate at room temperatures within the space between the spinning nozzles and the collector, as set forth in U.S. Published Patent Application No. 2002/0092423. Instead, it was found to be necessary to apply temperatures well-above the spinning solvent boiling point to reduce the spinning solvent levels to less than about 1000 ppmw in a continuous process and within a commercially viable time. Copending U.S. Serial No. 11/595,176, filed November 19, 2006, discloses a solvent stripping method for removing solvent from solvent-laden nanofibers at relatively low stripping temperatures and limited residence times. Solvent removal down to concentrations of 300 ppm is exemplified.

In order to remove the residual solvent, the solvent stripping process often requires the use of an elevated temperature. This heating of the nonwoven web can lead to undesirable chemical and mechanical degradation of the polymer. According to the present invention, the presence of an antioxidant has been found to help retard the thermo-oxidative degradation of the fiber polymer, allowing for solvent stripping at higher temperatures, such as from greater than about 70 °C up to just below the melting point of the fiber polymer, or for a longer residence times, as compared to the maximum safe temperatures and residence times in the absence of an antioxidant. Accordingly, the presence of antioxidants helps in reducing the residual solvent to very low levels, which was not previously possible.

The antioxidants are mixed into the spinning solution in an amount sufficient to retard decomposition of the polymer. The amount of antioxidant varies upon the efficiency of the antioxidant in retarding thermal degradation for a particular polymer, but is generally effective in the range of about 0.01 weight percent to about 5 weight percent based on the weight of the polymer or even about 0.05 weight percent to about 2 weight percent based on the weight of the polymer. Alternatively, the antioxidant can be compounded with the polymer prior to dissolution, or even copolymerized with the polymer under certain circumstances.

Antioxidants that are useful for this invention include: phenolic amides such as N,N'-hexamethylene bis(3,5-di-(tert)-butyl-4-hydroxyhydrocinnamamide) (Irganox 1098); amines such as various modified benzenamines (e.g. Irganox 5057); phenolic esters such as ethylenebis(oxyethylene)bis-(3-(5-tert-butyl-4-hydroxy-m-tolyl)-propionate (Irganox 245) (all available from Ciba Specialty Chemicals Corp., Tarrytown, NY); organic or inorganic salts such as mixtures of cuprous iodide, potassium iodide, and zinc salt of octadecanoic acid, available as Polyad 201 (from Ciba Specialty Chemicals Corp., Tarrytown, NY), and mixtures of cupric acetate, potassium bromide, and calcium salt of octadecanoic acid, available as Polyad 1932-41 (from Polyad Services Inc., Earth City, MO); hindered amines such as 1,3,5-triazine-2,4,6-triamine,N,N"'-[1,2-ethane-diyl-bis[[[4,6-bis-[butyl (1,2,2,6,6-pentamethyl-4-piperidinyl)amino]-1,3,5-triazine-2-yl]imino]-3,1-propanediyl]] bis [N',N"-dibutyl-N',N" -bis(1,2,2,6,6-pentamethyl-4-piperidinyl) (Chimassorb 119 FL), 1,6-hexanediamine, N, N'-bis(2,2,6,6-tetramethyl-4-piperidinyl)-polymer with 2,4,6-trichloro-1,3,5-triazine, reaction products with N-butyl-1-butanamine an N-butyl-2,2,6,6-tetramethyl-4-piperidinamine (Chimassorb 2020), and poly[[6-[(1,1,3,3-tetramethylbutyl)amino]-1,3,5-triazine-2,4-diyl][2,2,6,6-tetramethyl-4-piperidinyl)imino]-1,6-hexanediyl[(2,2,6,6-tetramethyl-4-piperidinyl)imino]]) (Chimassorb 944) (all available from Ciba Specialty Chemicals Corp., Tarrytown, NY); polymeric hindered phenols such as 2,2,4 trimethyl-1,2 dihydroxyquinoline (Ultranox 254 from Crompton Corporation, a subsidiary of Chemtura Corporation, Middlebury, CT, 06749); hindered phosphites such as bis(2,4-di-t-butylphenyl) pentaerythritol diphosphite (Ultranox 626 from Crompton Corporation, a subsidiary of Chemtura Corporation, Middlebury, CT, 06749); and tris(2,4-di-tert-butyl-phenyl) phosphite (Irgafos 168 from Ciba Specialty Chemicals Corp., Tarrytown, NY); 3-(3,5-di-tert-butyl-4-hydroxyphenyl)propionic acid (Fiberstab PA6, available from Ciba Specialty Chemicals Corp., Tarrytown, NY), and combinations and blends thereof.

The presence of antioxidants in the fibers permits the use of higher stripping temperatures and/or longer residence times in the solvent stripping zone, which can rapidly reduce the solvent concentration in the fibers to less than about 1,000 ppmw or even less than about 100 ppmw.

Examples of types of solvent stripping zones that can be utilized include zones that utilize heated gas or radiant energy, for example, infrared energy and microwave energy.

### EXAMPLES

The nonwoven web examples below were prepared according to the electroblowing method described in WO2003/080905 from a polymer solution of nylon 6, 6 polymer in formic acid solvent, with or without antioxidant to form nonwoven webs containing some residual solvent.

The residual formic acid content in the nonwoven sheets of nylon was determined using standard wet chemistry techniques and ion chromatography analysis. In a typical determination, a sample of known mass was placed in caustic solution. An aliquot of the resulting solution was analyzed by ion chromatography and the area under the peak corresponding to neutralized formic acid (formate anion) was proportional to the quantity of formic acid in the sample.

### Comparative A, B and C

The Comparative Examples were derived from a control nonwoven web prepared as set forth above, but in the absence of an antioxidant. The resulting control nonwoven web had a basis weight of 11.5 g/m² with fibers having an average fiber diameter of 350 nanometers. The nonwoven web had a residual solvent content of 2419 ppm. The master nonwoven web was transported through a solvent stripping zone at a temperature of 180°C with hot air impinging the surface of the nonwoven web for residence times of 24, 48 and 240 seconds to produce Comparative Examples A, B and C, respectively. The amount of formic acid remaining for each Comparative Example is listed in the Table.

### Examples 1, 2 and 3

The Examples were prepared in the same manner as the control nonwoven web of the Comparative Examples, except 0.5 weight percent of antioxidant, Irganox 1098 (available from Ciba Specialty Chemicals Corp., Tarrytown, NY), based on weight of polymer was added to the spinning solution. The resulting improved nonwoven web had a basis weight of 11.3 g/m² with fibers having an average fiber diameter of 350 nanometers. The nonwoven web had a residual solvent content of 2783 ppm. The improved nonwoven web was transported through a solvent stripping zone at a temperature of 180°C with hot air impinging the surface of the nonwoven web for residence times of 24, 48 and 240 seconds to produce Examples 1, 2 and 3, respectively. The amount of formic acid remaining for each Example is listed in the Table.

**TABLE**

| FORMIC ACID DATA | | | |
|---|---|---|---|
| Example | Antioxidant (weight %) | Residence Time (sec) | Formic Acid (ppm) |
| A | 0 | 24 | 383 |
| B | 0 | 48 | 208 |
| C | 0 | 240 | 549 |
| 1 | 0.5 | 24 | 307 |
| 2 | 0.5 | 48 | 112 |
| 3 | 0.5 | 240 | 79 |

Comparative Examples A, B and C show a reduction in the amount of formic acid with transportation through the stripping zone. Generally, one would expect a decrease in the amount of formic acid with increasing residence time in the zone stripping zone. However, it is observed that increasing the residence time from 48 to 240 seconds for Comparative Examples B and C respectively, increases the amount of formic acid. While not wishing to be bound by theory, it is believed that this increase in the amount of formic acid is due to degradation of the nylon to produce additional formic acid.

Examples 1, 2 and 3 also show a reduction in the amount of formic acid with transportation through the stripping zone. However, at the same temperature and residence times, the antioxidant containing nonwoven webs of the invention show a greater reduction in the amount of formic acid than the nonwoven webs without antioxidant. In addition, Example 3 with a residence time of 240 seconds shows a continued reduction in the amount of formic acid from 48 seconds as compared to the increase in the amount of formic acid for the corresponding Comparative Examples. Again, while not wishing to be bound by theory, it is believed that this continued reduction in the amount of formic acid is due to protection of the nylon by the antioxidant to minimize or to prevent production of formic acid.

These examples demonstrate that the presence of an antioxidant during solvent stripping at an elevated temperature allow for higher levels of spinning solvent to be removed.

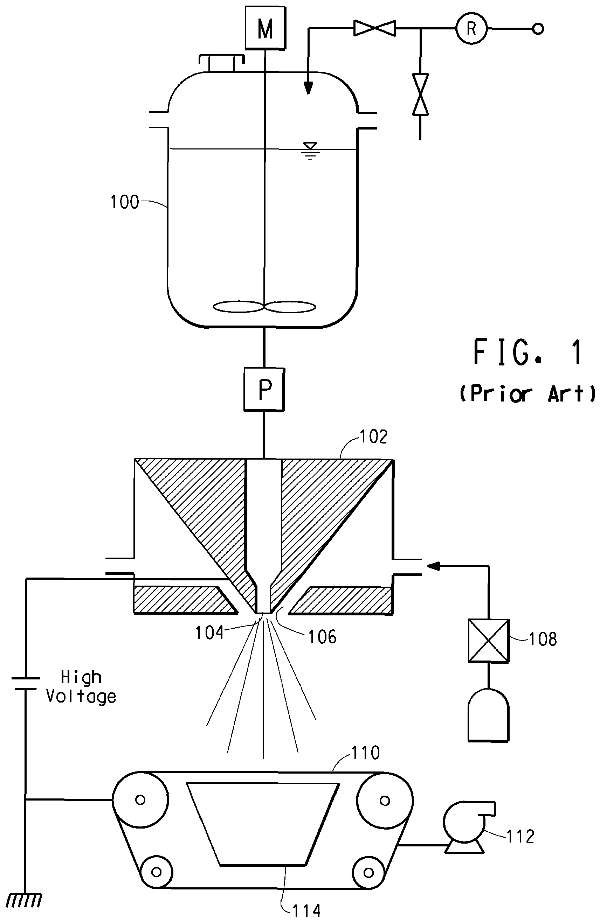

## Claims

1. A process for stripping chemically bonded spinning solvent from a solution-spun nonwoven web comprising the steps of:
providing a nonwoven web of solvent-laden polymeric nanofibers comprising a thermal-stabilizing effective amount of antioxidant, and
heating and transporting the nonwoven web through a solvent stripping zone at a temperature and residence time sufficient to reduce the solvent concentration of the nonwoven web to less than about 1,000 ppmw.

2. The process according to claim 1 wherein the antioxidant is in the amount of about 0.01 weight percent to about 5 weight percent, based on the weight of the polymer.

3. The process according to claim 1 wherein the nonwoven web is heated to between about 70 °C and the melting point of the fiber polymer.

4. The process according to claim 1 wherein the antioxidant is selected from the group consisting of phenolic amides, phenolic esters, organic or inorganic salts of copper, hindered amines, polymeric hindered phenols, hindered phosphites, and combinations and blends thereof.

5. The process according to claim 1, wherein said antioxidant is compounded with the polymer, co-polymerized with the polymer, or added to the spinning solvent prior to solution spinning.

6. The process according to claim 1 wherein the polymer is polyamide and the solvent is formic acid.

7. The process according to claim 6 wherein the antioxidant is selected from the group consisting of phenolic amides, phenolic esters, organic or inorganic salts of copper, hindered amines, polymeric hindered phenols, hindered phosphites, and combinations and blends thereof.

8. The process according to claim 1, wherein the temperature and residence time is sufficient to reduce the solvent concentration of the nonwoven web to less than 100 ppmw.

9. The process according to claim 8, wherein the web temperature is about 180 °C and the residence time is about 48 seconds.

10. The process according to claim 1, wherein the solvent stripping zone utilizes radiant energy, infrared radiation or a combination thereof to reduce the solvent concentration of the nonwoven web.

## Patentansprüche

1. Verfahren zum Abziehen von chemisch gebundenem Spinnlösungsmittel von einer lösungsgesponnenen Vliesstoffbahn, umfassend die Schritte des:
Bereitstellens einer Vliesstoffbahn aus lösungsmittelbeladenen polymeren Nanofasern, die eine thermisch stabilisierende wirksame Menge Antioxidationsmittel umfassen und
Erhitzens und Transportierens der Vliesstoffbahn durch eine Lösungsmittelabziehzone bei einer Temperatur und in einer Aufenthaltszeit, die ausreichen, um die Lösungsmittelkonzentration der Vliesstoffbahn auf weniger als etwa 1 000 Gew.-ppm zu reduzieren.

2. Verfahren nach Anspruch 1, wobei das Antioxidationsmittel in der Menge von etwa 0,01 Gewichtsprozent bis etwa 5 Gewichtsprozent, auf das Gewicht des Polymers bezogen, vorliegt.

3. Verfahren nach Anspruch 1, wobei die Vliesstoffbahn auf zwischen etwa 70 °C und dem Schmelzpunkt des Faserpolymers erhitzt wird.

4. Verfahren nach Anspruch 1, wobei das Antioxidationsmittel aus der Gruppe ausgewählt wird bestehend aus phenolischen Amiden, phenolischen Estern, organischen oder anorganischen Kupfersalzen, gehinderten Aminen, polymeren gehinderten Phenolen, gehinderten Phosphiten und Kombinationen und Abmischungen davon.

5. Verfahren nach Anspruch 1, wobei das Antioxidationsmittel vor dem Lösungspinnen mit dem Polymer compoundiert, mit dem Polymer copolymerisiert oder dem Spinnlösungsmittel zugegeben wird.

6. Verfahren nach Anspruch 1, wobei das Polymer Polyamid ist und das Lösungsmittel Ameisensäure ist.

7. Verfahren nach Anspruch 6, wobei das Antioxidationsmittel aus der Gruppe ausgewählt wird bestehend aus phenolischen Amiden, phenolischen Estern, organischen oder anorganischen Kupfersalzen, gehinderten Aminen, polymeren gehinderten Phenolen, gehinderten Phosphiten und Kombinationen und Abmischungen davon.

8. Verfahren nach Anspruch 1, wobei die Temperatur und Aufenthaltszeit ausreichen, um die Lösungsmittelkonzentration der Vliesstoffbahn auf weniger als etwa 100 Gew.-ppm zu reduzieren.

9. Verfahren nach Anspruch 8, wobei die Bahntemperatur etwa 180 °C beträgt und die Aufenthaltszeit etwa 48 Sekunden beträgt.

10. Verfahren nach Anspruch 1, wobei die Lösungsmittelabziehzone Strahlungsenergie, Infrarotstrahlung oder eine Kombination davon verwendet, um die Lösungsmittelkonzentration der Vliesstoffbahn zu reduzieren.

## Revendications

1. Procédé d'épuration d'un solvant de filage chimiquement lié d'un voile non-tissé filé en solution comprenant les étapes de:
préparation d'un voile non-tissé de nanofibres polymères chargées en solvant comprenant une quantité efficace de stabilisation thermique d'antioxydant, et
chauffage et transport du voile non-tissé à travers une zone d'épuration de solvant à une température et sur un temps de résidence suffisants pour réduire la concentration en solvant du voile non-tissé jusqu'à moins d'environ 1 000 ppm en poids.

2. Procédé selon la revendication 1, dans lequel l'antioxydant est présent en la quantité d'environ 0,01 pour cent en poids à environ 5 pour cent en poids, sur la base du poids du polymère.

3. Procédé selon la revendication 1, dans lequel le voile non-tissé est chauffé entre environ 70°C et le point de fusion du polymère de fibres.

4. Procédé selon la revendication 1, dans lequel l'antioxydant est sélectionné dans le groupe constitué des amides phénoliques, des esters phénoliques, des sels organiques ou inorganiques de cuivre, des amines bloquées, des phénols polymères bloqués, des phosphites bloqués, et de leurs combinaisons et mélanges.

5. Procédé selon la revendication 1, dans lequel ledit antioxydant est malaxé avec le polymère, copolymérisé avec le polymère, ou ajouté au solvant de filage avant le filage de la solution.

6. Procédé selon la revendication 1, dans lequel le polymère est le polyamide et le solvant est l'acide formique.

7. Procédé selon la revendication 6, dans lequel l'antioxydant est sélectionné dans le groupe constitué des amides phénoliques, des esters phénoliques, des sels organiques ou inorganiques de cuivre, des amines bloquées, des phénols polymères bloqués, des phosphites bloqués, et de leurs combinaisons et mélanges.

8. Procédé selon la revendication 1, dans lequel la température et le temps de résidence sont suffisants pour réduire la concentration en solvant du voile non-tissé jusqu'à moins de 100 ppm en poids.

9. Procédé selon la revendication 8, dans lequel la température du voile est d'environ 180°C et le temps de résidence est d'environ 48 secondes.

10. Procédé selon la revendication 1, dans lequel la zone d'épuration de solvant utilise de l'énergie radiante, le rayonnement infrarouge ou une combinaison de ceux-ci pour réduire la concentration en solvant du voile non-tissé.
